# EUROPÄISCHE PATENTSCHRIFT

(11) **EP 1 218 647 B1**
(45) Veröffentlichungstag und Bekanntmachung des Hinweises auf die Patenterteilung: **01.12.2004**
(21) Anmeldenummer: 00967742.8
(22) Anmeldetag: 22.09.2000
(51) Int. Cl.: F16D 65/34, B60T 13/74, B61H 5/00

(54) **BREMSAKTUATOR**
BRAKE ACTUATOR
ACTIONNEUR DE FREIN

(30) Priorität: 23.09.1999 DE 19945701
(43) Veröffentlichungstag der Anmeldung: 03.07.2002
(73) Patentinhaber: KNORR-BREMSE Systeme für Schienenfahrzeuge GmbH, 80809 München (DE)
(72) Erfinder: WOLFSTEINER, Peter, 80797 München (DE); FUDERER, Erich, 82265 Fürstenfeldbruck (DE); STALTMEIR, Josef, 80807 München (DE)
(86) Internationale Anmeldenummer: PCT/EP2000/009271
(87) Internationale Veröffentlichungsnummer: WO 2001/021977

(56) Entgegenhaltungen:
- DE-A- 19 617 796
- DE-C- 19 607 759
- US-A- 4 589 531

## Beschreibung

Die Erfindung betrifft einen Bremsaktuator, insbesondere für ein Schienenfahrzeugbremse, mit einer Betriebsbremseinheit mit einem elektromotorischen Antrieb zum Zuspannen und Lösen der Bremse, einer Sicherheitsbremseinheit mit mindestens einer Speicherfedereinrichtung zum Zuspannen der Bremse und einer Bremsspindel zum Umsetzen der Drehbewegung des elektromotorischen Antriebes in eine translatorische Bewegung zum Betätigen einer Bremszuspannmechanik.

Eine derartige Anordnung ist aus der DE 196 07 759 C1 bekannt, welche eine elektromotorische Bremsbetätigungsvorrichtung mit einem Federspeicher für Schienenfahrzeuge zeigt, wobei ein regelbarer Elektroaufzugsmotor zur Betätigung eines Federspeichers dient und ein Federspeicherschubzugrohr einen Gewindetrieb mit einer - Gewindemutter und einer Gewindespindel aufweist.

Aus der DE 195 14 463 C1 ist eine Bremszuspanneinheit für Scheibenbremsen von Fahrzeugen, insbesondere von Schienenfahrzeugen bekannt, welche eine Bremszange mit zwei Zangenhebeln aufweist, von denen einer über ein Exzentergetriebe betätigbar ist und von denen der andere an einem Gehäuse gelagert ist. Diese Bremszangeneinheit stellt einen Bremsaktuator dar, der einerseits einen elektromotorischen Antrieb aufweist und der andererseits eine Sicherheitsbremseinheit mit einer Speichereinrichtung zum Zuspannen der Bremse umfaßt.

Die DE 198 04 454 A1 zeigt eine elektromechanisch betätigbare Scheibenbremse für Kraftfahrzeuge. Bei dieser Scheibenbremse ist das Untersetzungsgetriebe als Rollengewindetrieb mit Rückführung der Gewinderollen ausgebildet.

Die DE 30 48 766 zeigt eine Zuspannvorrichtung für Feststellbremsen von Schienenfahrzeugen, welche ebenfalls elektromotorisch betätigt wird, wobei der Elektromotor über ein Untersetzungsgetriebe ein Umsetzgetriebe für das Umsetzen der Drehbewegung in eine Longitudinal-Bewegung eines Betätigungsgliedes aufweist.

Die EP 0 129 969 zeigt darüber hinaus einen Bremsaktuator, bei dem es möglich ist, eine Bremskraft erzeugende Feder über eine Elektromotoranordnung zu spannen.

Im wesentlichen werden derzeit im Schienenfahrzeugbereich zwei Rad-Bremssysteme eingesetzt: pneumatische Bremssysteme (zu denen auch elektropneumatische Systeme und Vakuumbremsen gerechnet werden können) und (elektro)hydraulische Bremssysteme. Rein elektromechanische Bremssysteme haben sich bisher nicht in nennenswertem Umfang am Markt etablieren können.

Die Krafterzeugung wird bei beiden Technologien durch Kolben in Zylindern realisiert, welche im allgemeinen nur eine Wirkrichtung besitzen. Die Rückstellung der Kolben erfolgt durch die infolge der elastischen Verformung des Bremsgestänges auftretenden Kräfte sowie durch Rückstellfedern, die zudem das Einnehmen einer Endlage sicherstellen.

Die lokale Energiespeicherung für den Fall von Versorgungsunterbrechungen erfolgt bei pneumatischen Systemen in Druckluftbehältern bzw. bei hydraulischen Systemen in entsprechenden Hydrobehältern und bei elektromechanischen Systemen durch Zusatzbatterien oder eine redundante Stromversorgung. Zusätzlich beinhalten passive Systeme die Möglichkeit des einmaligen Zuspannens durch die in der Feder gespeicherte Energie.

Vor diesem Hintergrund setzt die Erfindung bei der Aufgabe an, einen Bremsaktuatur zu schaffen, der eine hohe Betriebssicherheit gewährleistet und kompakt sowie kostengünstig aufgebaut ist.

Die Erfindung erreicht dieses Ziel durch den Gegenstand des Anspruches 1.

Dadurch, daß die Bremsspindel und die Speicherfeder mechanisch derart auf einfache Weise "in Reihe" geschaltet sind, wird verhindert, daß sie im Betriebsbremsfall gemeinsam die Bremskraft erzeugen. Die Sicherheitsfeder kann als Parkbremse genutzt werden und auch als Notbremse bei einem Defekt (z.B. Strom-, Elektronik- oder Motorausfall). Vorteilhaft ist auch der geringe Energiebedarf bei kleinen Bremskräften.

Weitere vorteilhafte Ausführungsformen der Erfindung sind den übrigen Unteransprüchen zu entnehmen.

Nachfolgend wird die Erfindung unter Bezug auf die Zeichnung anhand von Ausführungsbeispielen näher beschrieben. Es zeigt:
- Figur 1: ein erstes Ausführungsbeispiel eines erfindungsgemäßen Bremsaktuators für eine Bremszangeneinheit für Schienenfahrzeuge,
- Figur 2: einen Schnitt längs der Linie A-A in Figur 1.
- Fig. 3: eine Prinzipskizze, welche das Einbauprinzip des erfindungsgemäßen Bremsaktuators in einer Schienenfahrzeug-Bremszangeneinheit veranschaulicht;
- Fig. 4: den Bremsaktuator aus Fig. 1 in eingebremster Stellung des Federspeichers;
- Fig. 5: den Bremsaktuator aus Fig. 1 in Lösestellung des Federspeichers;
- Fig. 6: den Bremsaktuator aus Fig. 1 bei einer Betriebsbremsung mit Hilfe des Elektromotorantriebes;
- Fig. 7: ein weiteres Ausführungsbeispiel eines erfindungsgemäßen Bremsaktuators;
- Fig. 8: den Bremsaktuator aus Fig. 7 in eingebremster Stellung des Federspeichers;
- Fig. 9: den Bremsaktuator aus Fig. 7 in Lösestellung des Federspeichers;
- Fig. 10: den Bremsaktuator aus Fig. 7 bei einer Betriebsbremsung mit Hilfe des Elektromotorantriebes;
- Fig. 11: eine konstruktive Variante des Ausführungsbeispiels aus Fig. 7.

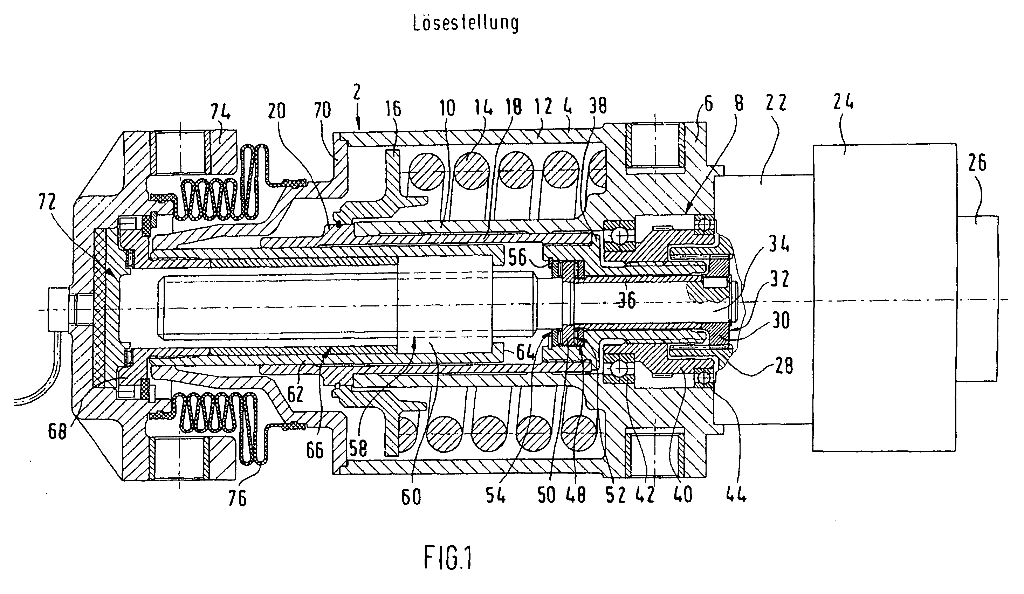

Fig. 1 zeigt einen Bremsakt (vielfach auch Aktuator genannt) 2 mit einem im wesentlichen hohlzylindrischen Gehäuse 4, das zu einem axialen Ende hin von einem Deckelabschnitt 6 abgeschlossen wird, welches eine zentrische Bohrung 8 aufweist. Ausgehend vom Deckelabschnitt 6 ist das Gehäuse 4 im wesentlichen doppelwandig ausgebildet, wobei in dem Raum zwischen der inneren Wandung 10 und der äußeren Wandung 12 eine Speicherfeder 14 angeordnet ist. Die Speicher-(Schrauben)feder 14 stützt sich an einem ihrer Enden am Deckelabschnitt 8 ab, an ihrem anderen axialen Ende wirkt sie auf einen ringartigen Schieber 16, der an seinem Innenumfang auf einer Hülse 18 mit einem Bund 20 befestigt ist. Der Außenumfang der Hülse 18 ist an der Innenwandung der inneren Wandung 10 verschieblich geführt. Die Hülse 18 steht ferner mit ihrem vom Deckelabschnitt abgewandten Ende am axialen Ende der Innenwandung 10 vorbei mit dem Bund 20 axial über das Ende des Gehäuses 4 vor.

An den Deckelabschnitt 6 sind an der von der Speicherfeder 14 abgewandten Seite in dieser axialen Folge ein Getriebe 22, ein Elektromotor 24 und eine (z.B. elektromagnetische) Haltebremse 26 angesetzt. Das Getriebe 22 weist an seiner zum Deckelabschnitt weisenden axialen Seite einen Hohlwellenansatz 28 als Abtriebswelle auf. Der Hohlwellenansatz 28 ist an seinem Innenumfang mit axial verlaufenden Nuten versehen, in welche die Außenabschnitte eines Flügelrades/Mitnehmers 30 mit axial ausgerichteten Flügel 32 eingreifen. Auf diese Weise ist der Mitnehmer 30 relativ zur Hohlwelle 28 unverdrehbar aber axial verschieblich geführt. Der Mitnehmer 30 ist auf dem axialen Endumfang eines Bolzens (auch Bremsspindel genannt) 34 befestigt, dessen eines axiales Ende in der Hohlwelle 28 liegt und dessen anderes axiales Ende über das axiale Ende des Gehäuses 4 in den Bremskrafterzeuger vorsteht.

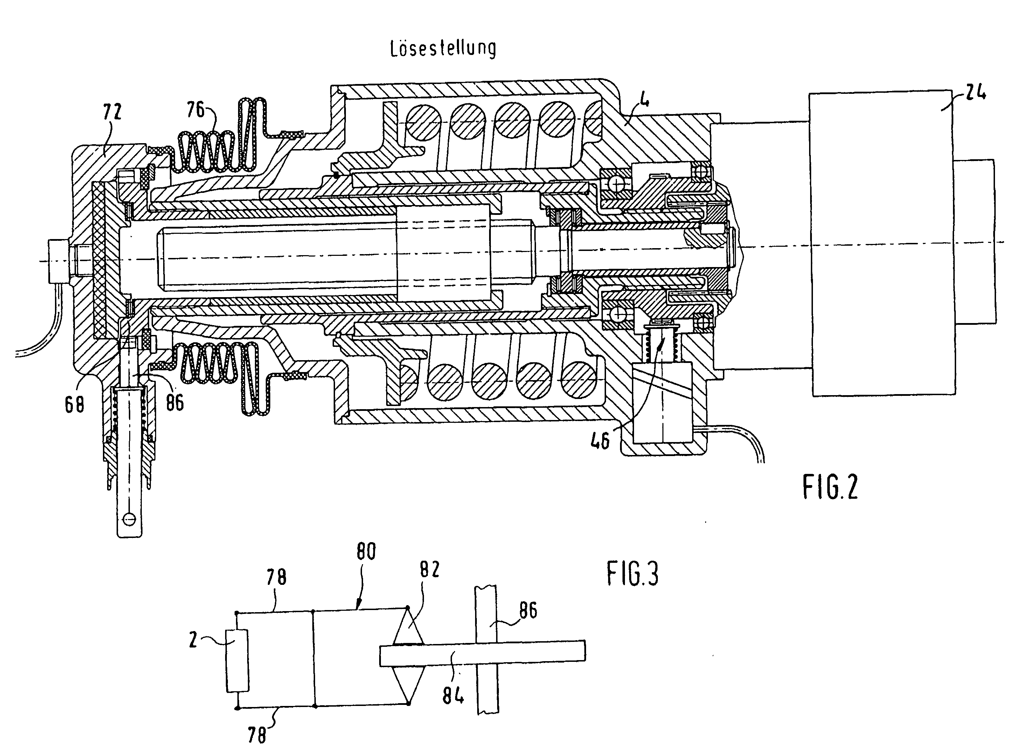

In dem sich an den Mitnehmer anschließenden axialen Bereich des Bolzens 34 sind über den Bolzen 34 zwei axiale Hülsen 36, 38 gesetzt. Die äußere Hülse, eine Spindelhülse 38, ist auf der inneren Hülse 36 verschieblich und relativ zu dieser verdrehbar. Die äußere Spindelhülse 38 ist an ihrem Außenumfang ca. über die Hälfte ihrer axialen Erstreckung in ihrem zum Deckelabschnitt weisenden Bereich mit einem Außengewinde versehen, welches mit dem Innengewinde einer auf der Spindelhülse 38 aufgeschraubten Mutter 40 in Eingriff steht. Die Mutter 40 ist mit zwei Lagern 42, 44 im Gehäuse 4 verdrehbar gelagert und kann über eine magnetisch wirkende Verriegelung bzw. einen Riegel 46 (siehe Fig. 2) in ihrer Drehstellung arretiert werden.

An ihrem vom Außengewinde abgewandt liegenden axialen Ende ist die Spindelhülse 38 abgestuft ausgebildet. Auf dem Außenumfang der Abstufung 48 ist das eine Ende der Hülse 20 verschraubt (oder auf andere Weise befestigt). Das vom Deckelabschnitt 6 abgewandt liegende axiale Ende der Spindelhülse 38 ist an einer Scheibe 50 mit Axiallagern 52, 54 abgestützt, die wiederum axial durch einen in einer Nut des Innenumfangs der Spindelhülse 38 liegenden Sprengring 56 gesichert sind. Die Scheibe 50 stützt sich zudem an einer radialen Abstufung des Bolzen 34 ab.

In dem sich an das axiale Ende der Spindelhülse 38 anschließenden Bereich ist der Bolzen 34 mit einer Mutter/Spindelbaueinheit 58 versehen, die beispielsweise als Kugelumlaufspindel, als Rollengewindetrieb oder als Planeten-Wälzgewindetrieb realisierbar ist. Bei Drehungen der Spindel bzw. des Bolzens 34 wird die Mutter 60 auf dem Bolzen 34 verdreht und nimmt dabei die an ihrem Außenumfang befestigte Hülse 62 mit. Die Hülse 62 ist an ihrem Innenumfang mit einem radialen Ansatz 64 versehen, der die Mutter zur einen axialen Seite hin fixiert, an ihrer anderen Seite erfolgt die Fixierung der Mutter 60 durch eine axial an die Mutter angesetzte Buchse 66, die wiederum axial über einen am Innenumfang der Hülse 62 befestigten Ring 68 gesichert ist. Zwischen dem axialen Endumfang der Buchse 62 und dem axialen Ende des Gehäuses 4 erstreckt sich ein separater Gehäusedeckel 70 mit abgestufter Querschnittsgeometrie.

Der Ring bzw. die Mutter 68 ist radial an einer Jocheinrichtung 72 gelagert (siehe auch Fig. 2), die ein Ringgehäuseelement 74 umfaßt, an dem ein Hebel einer Bremszange befestigbar ist. Zwischen dem Ringgehäuseelement 74 und dem Gehäusedeckel 70 ist ein Faltenbalg 76 zur Abdichtung der Jocheinrichtung 72 gegenüber dem relativ zur Jocheinrichtung 72 verschieblichen Gehäusedeckel 70 angeordnet.

Die Anordnung des Bremsaktuators bzw. Bremskrafterzeugers 2 in einer Scheibenbremse für Schienenfahrzeuge erschließt sich aus der Prinzipskizze der Fig. 3. Der Bremsaktuator 2 wirkt auf die einen Enden der Hebel 78 einer Bremszange 80 zum Zuspannen von Bremsbacken 82 in Richtung einer Bremsscheibe 84, die auf einer Achse 86 befestigt ist. Dabei wird die Jocheinrichtung 72 vom Gehäuse 4 weg nach außen verschoben, so daß die Bremszange 80 zuspannt.

Der erfindungsgemäße Bremsaktuator zeichnet sich dadurch aus, daß es bei baulich kompakter Anordnung gelingt, zwei vollständig voneinander getrennte Zuspanntechniken besonders kompakt miteinander zu kombinieren, denn die Bremse ist sowohl durch die Speicherfeder 14 als auch durch den Elektromotor 24 zuspannbar, wobei die Speicherfeder 14 eine Sicherheitsebene für die Bremse beim Ausfall des Elektromotors bildet.

Die wesentlichen Funktionsblöcke der Bremse sind
das Gehäuse 4;
die Motor/Getriebeeinheit (mit Motorbremse 26) 22, 24 zum Antreiben der Gewinde-Bremsspindel 34;
die Mutter-Spindeleinheit (Bremsspindel) 58 zur Umsetzung der Drehbewegung in eine translatorische Verschiebung;
die Jocheinrichtung 72 mit Notlöse- und Kraftmesseinrichtung zur Aufbringung der Zuspannkraft auf die Bremszange 80;
die Speicherfeder 14 (Sicherheitsfeder);
die zweite Mutter-Spindeleinheit aus der Mutter 40 und der Spindelhülse 36 (Speicherfederspindel) mit Verriegelung zum Gespannthalten der Speicherfeder 14 (Bremse 46 bzw. Riegel; z.B. mit elektromagnetischer Betätigung);
ein Keilwellenprofil für die translatorischen Verschiebungen zwischen Spindel 34 und dem Antrieb (zum Einlegen des Federspeichers).

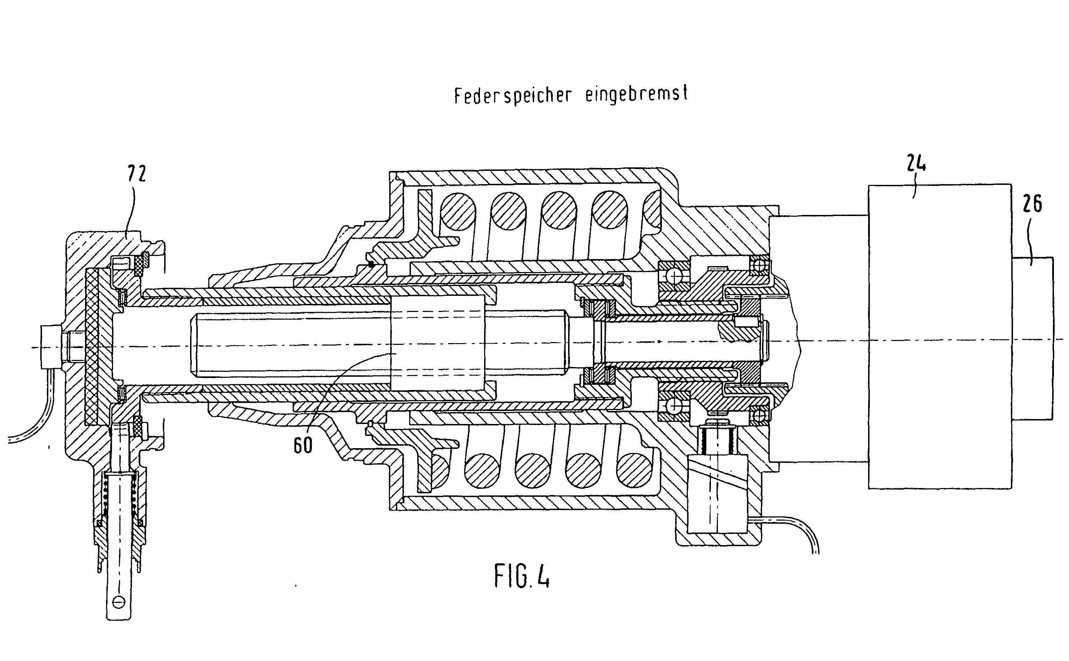

Die Funktion der Bremse beim Einlegen des Federspeichers erschließt sich aus Fig. 4. Diese Figur zeigt die eingebremste Stellung des Federspeichers und veranschaulicht so die Art der Bewegungen der Bremskomponenten (Rotation, Translation oder Rotation und Translation) beim Einbremsen.

Durch ein Lösen des Riegels 76 an der Mutter 40 wird deren Haltefunktion aufgehoben, die Speicherfeder 14 entspannt sich und baut über eine Verschiebung der Bremsspindel 34 Bremskraft auf. Die eingelegte Motorbremse 26 verhindert hierbei einen Abbau der Bremskraft über eine Drehung der Bremsspindel 34. Beim Entspannen der Speicherfeder 34 schiebt diese den Schieberring 16 vor, welcher die Hülse 18 mitnimmt sowie die Spindelhülsen 34 und 38 (Translation), die Hülse 62 sowie die gesamte Jocheinrichtung 72 (Translation). Dabei dreht sich die Mutter 40 auf der Spindelhülse 38, die Spindelhülse 38 sowie die übrigen verschobenen Elemente drehen sich ihrerseits aber nicht.

Zum Lösen der Federspeicherbremse wird die Bremsspindel 34 vom Elektromotor 24 in Bremsrichtung angetrieben. Da sich die Bremsspindel 34 über ein Axiallager 52, 54 auf die Speicherfeder 14 abstützt, wird die Speicherfeder 14 durch die erhöhte Bremskraft bei gelöster Verriegelung in die Lösestellung bewegt. Durch Einlegen der Verriegelung 46 wird die Speicherfeder 14 in Löseposition gehalten. Nach dem Verriegeln der Speicherfeder 14 dreht sich der Elektromotor 24 in Löserichtung und baut damit die noch vorhandene Bremskraft ab und stellt ein bestimmtes Lüftspiel an den Bremsbelägen ein (dieser Vorgang ist in Bild 5 nicht dargestellt). Beim Lösen der "Speicherfederbremse" wird die Spindel 34 sowohl gedreht als auch translatorisch zurückgezogen.

Neben Bremsungen durch eine Betätigung der Federspeicherbremse sind Bremsungen durch Nutzung des elektromechanischen Antriebes realisierbar.
Diese Betriebsbremsungen erfolgen ausschließlich durch eine Betätigung des Elektromotors 24. Die Drehungen der Hohlwelle 28 mit Mitnehmer 30 und Bolzen 34 in Bremsrichtung führen über die Mutter-/Spindelbaueinheit 58 zu einer Überbrückung des Lüftspiels und anschließend zu einem Bremskraftaufbau. Die Drehungen der Hohlwelle 28 in entgegengesetzter Richtung führen dagegen zum Abbau von Bremskraft und zum Aufbau des Lüftspiels. Bei einer Betätigung des Elektromotors 24 ist entsprechend die Motorbremse 26 zu lösen. Da der Riegel 46 blockiert ist, kann sich die Mutter 40 nicht drehen, so daß auch die Spindelhülse 38 still steht, während die Bremsspindel 34 gedreht wird.

Der maximale Betriebsbremshub ist so ausgelegt, daß er eine Verschleißnachstellung ermöglicht. Ein separater Nachsteller zur Kompensation des Belagverschleiß ist somit nicht mehr nötig.

Zur Regelung der Zuspannkraft ist in die Jocheinrichtung 72 eine Kraftmesseinrichtung integrierbar. Um eine gezielte Einstellung des Lüftspiels beim Lösen der Bremse zu ermöglichen, wird zusätzlich zu diesem Kraftsensor auch noch ein Lagesensor benötigt. Beim Einsatz eines Servomotors ist die im Motor üblicherweise integrierte Winkelmessung als Lagemessung einsetzbar. Es sind unter Umständen auch Lösungen denkbar, die eine explizite Kraftmessung vermeiden, da die Möglichkeit besteht, die Zuspannkraft über die Steifigkeit der Zangen 80 aus einer Lagemessung zu rekonstruieren.

Der Zweck der Notlöseeinrichtung 88 besteht darin, bei Ausfall der Energieversorgung die eingelegte Federspeicherbremse lösen zu können. Bei der oben dargestellten Variante des Aktuators wird dies dadurch erreicht, daß die Momentenabstützung der Bremsspindelmutter (68) am Riegel 88 in der Jocheinrichtung 72 gelöst wird. Der gleiche Effekt könnte durch ein Lösen der Motorbremse erreicht werden, jedoch verhindert eventuell die hohe Übersetzung und die damit einhergehende Reibung des Getriebes zwischen Motor und Spindel einen ausreichenden Kraftabbau.

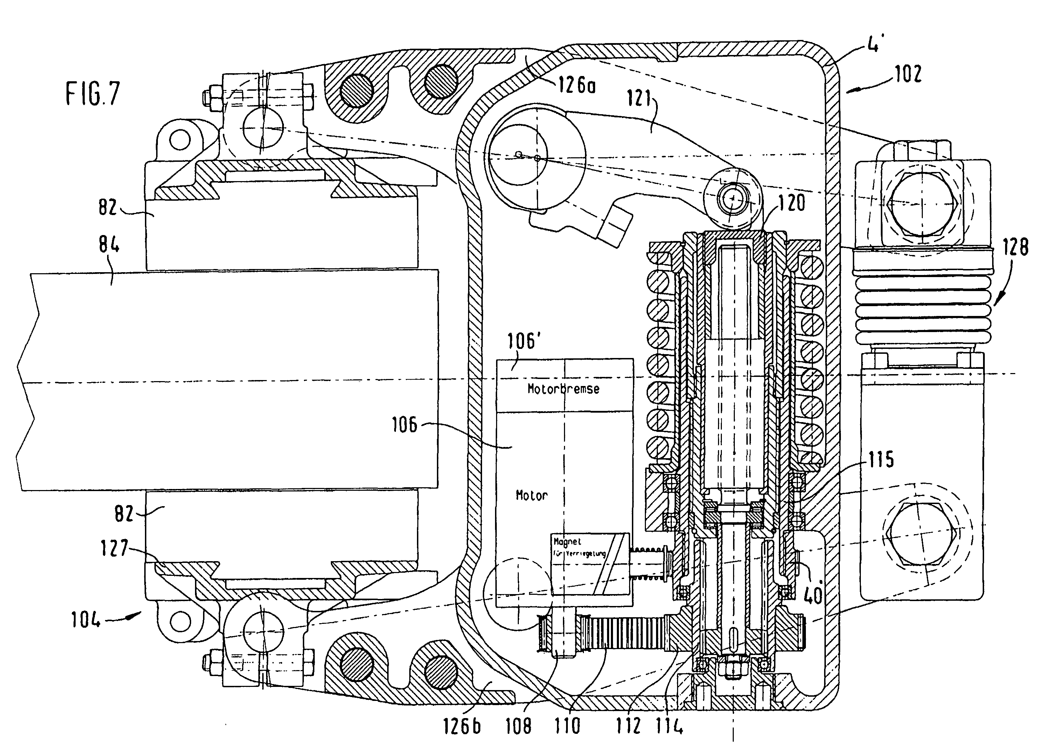

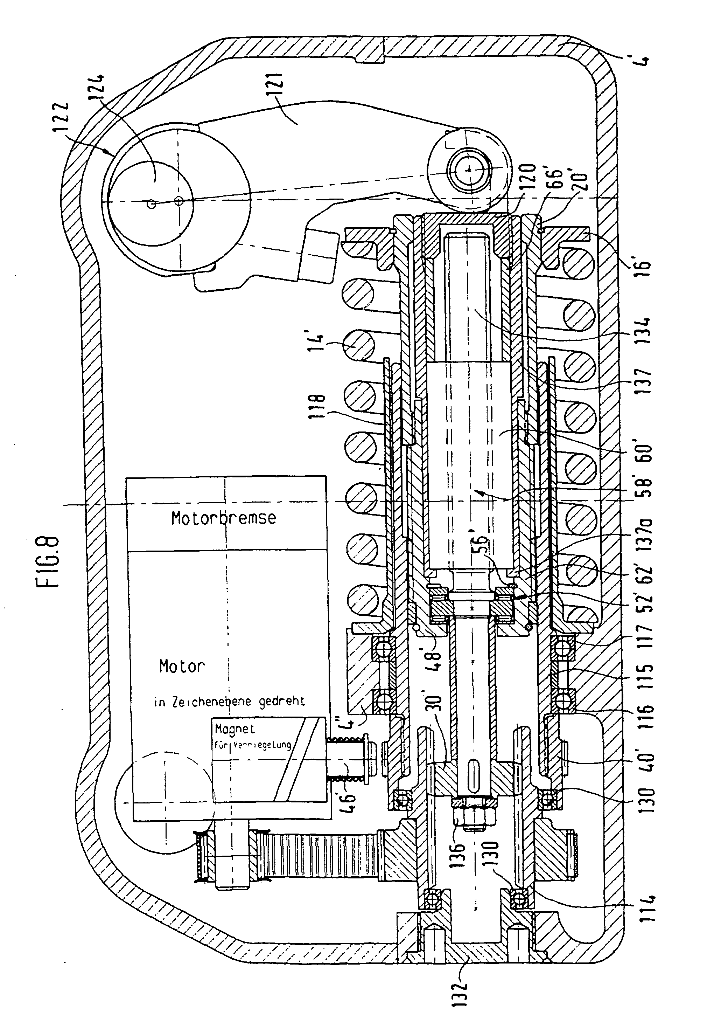

Eine weitere Variante der Erfindung ist in Fig. 7 und 8 dargestellt. Fig. 7 zeigt eine Zuspannvorrichtung 102 für eine Schienenfahrzeug-Scheibenbremse 104. Die Zuspannvorrichtung 102 umfaßt einen Elektromotor/Getriebe 106 (mit angesetzter Motorbremse 106') dessen Abtriebswelle 108 (oder die Abtriebswelle eines dem Elektromotor 6 zugeordneten Getriebes) über einen Zahnriemen 110 ein Ritzel 112 antreibt, welches auf einer Hülse 114 befestigt ist, welche an ihrem axialen Innenumfang wiederum mit axial verlaufenden Nuten versehen ist. Die Funktion der Hülse entspricht der Funktion der Hohlwelle 28 aus Fig. 1.

Auf der Hülse 114 ist eine Mutter 40' mit einem fixen Innenhülsenansatz 115 gelagert, der mit einem nicht selbsthemmenden Innengewinde versehen ist, welches auf ein entsprechendes Außengewinde einer Hülse 62' verschraubt ist. Die Mutter 40' kann wiederum über einen Magnetriegel 46' arretiert werden. Der Innenhülsenansatz 115 ist über Lager 116, 117 an einem inneren Gehäuseabsatz 4" mit Bohrung zum Durchführen der Bremsspindel 134 gelagert. Außen um den Hülsenansatz 115 herum liegt eine weitere Hülse 118, welche sich an dem nach innen an das Gehäuse 4' angeformten Bund 4" des Gehäuses 4' abstützt und eine Aufnahme für die konzentrisch zur Hülse 118 angeordnete Speicherfeder 14' bildet. Die Speicherfeder 14' wirkt wiederum an ihrem vom Gehäusebund abgewandt liegenden Ende auf einen ringförmigen Schieber 16', der auf einer inneren Hülse 20' befestigt ist, die auf einer inneren Buchse 66 befestigt ist, die wiederum auf einem Deckel 120 sitzt, welcher den Bremsspindelraum axial zu einer Seite hin abschließt. An der Außenseite des Deckels ist (an der von der Bremsspindel abgewandten Seite) ein Bremshebel 121 angelenkt, welcher auf einen Exzenter 122 wirkt. Der Exzenter 122 weist eine Exzenterwelle 124 auf, die an einen Zangenhebel 126a angelenkt ist, der mit einem zweiten Zangenhebel 126b eine Bremszange 80 bildet. An den einen Enden der Zangenhebel 126 sind jeweils Belaghalter 127 mit Bremsbacken 82 angeordnet, die in Richtung der Achse (hier nicht dargestellt) der Bremsscheibe 84 verschieblich sind. Die von den Bremsbelägen bzw. den Bremsbacken 82 abgewandt liegenden Enden der Zangenhebel 126 sind miteinander über einen Druckstangensteller 128 verbunden, der vorzugsweise elektrisch betätigt ausgelegt ist und einen Kraftsensor und eine Notlöseeinrichtung (nicht dargestellt) umfaßt.

Die Hülse 114 ist an ihrem zum Gehäuse 4' liegenden axialen Ende mit einem Radiallager 130 drehbar auf einem inneren zylindrischen Ansatz eines Gehäusedeckels 132 gelagert. Der Gehäusedeckel 132 ist von außen abnehmbar und ermöglicht den Zugang zu einem an dem einen axialen Ende der Bremsspindel 134 ausgebildeten Sechskant 136 zur Durchführung von Notlösevorgängen.

In dem sich axial an den Sechskant 136 anschließenden Bereich ist wiederum ein Mitnehmer 30' auf die Bremsspindel 134 aufgesetzt, so daß die Bremsspindel 134 in der äußeren Hülse 114 axial verschieblich aber relativ zur Hülse 114 unverdrehbar geführt ist. Zwischen der Hülse 114 und der Mutter 40', ist das Radiallager 130 vorgesehen, so daß die Mutter 40' auf der Hülse 114 frei rotieren kann.

Die Bremsspindel 134 und die Hülse 64 sind gegeneinander über Axiallager 52' abgestützt, welche einerseits von einer Abstufung (radial) der Gewinde-Bremsspindel und andererseits von einer Abstufung 48' der Hülse 62 lagefixiert sind. Auf dem Außenumfang der Abstufung 48' ist das eine Ende der Hülse 20' befestigt. Die Abstufung 48' ist an einer Scheibe 50' mit Axiallagern 52' abgestützt, die wiederum axial durch einen in einer Nut des Innenumfangs der Spindelhülse 62 liegenden Sprengring 56' gesichert sind.

In dem sich an das axiale Ende der Mutter 40' anschließenden Bereich ist der Bolzen 134 mit einer Mutter/Spindelbaueinheit 58' versehen. Bei Drehungen der Spindel bzw. des Bolzens 134 wird die Mutter 60' auf dem Bolzen 134 verdreht und nimmt dabei die an ihrem Außenumfang befestigte Hülse 137 mit. Die Hülse 137 ist an ihrem einen axialen Ende am Innenumfang mit einem radialen Ansatz 137a versehen, der die Mutter 60' zur einen axialen Seite hin fixiert, an ihrer anderen Seite erfolgt die Fixierung der Mutter 60' durch eine axial an die Mutter 60 angesetzte Buchse 66', die am Deckel 120 angreift.

Der Exzentermechanismus stellt eine zusätzliche Übersetzung dar. der eine Verminderung der Aktorkraft um ein Vielfaches ermöglicht. Ein Unterschied zur ersten Variante der Fig. 1 besteht darin, daß die Funktion der Verschleißnachstellung nicht in den Aktor integriert werden wird, in Bild 7 ist daher ein separater Nachsteller dargestellt (128).

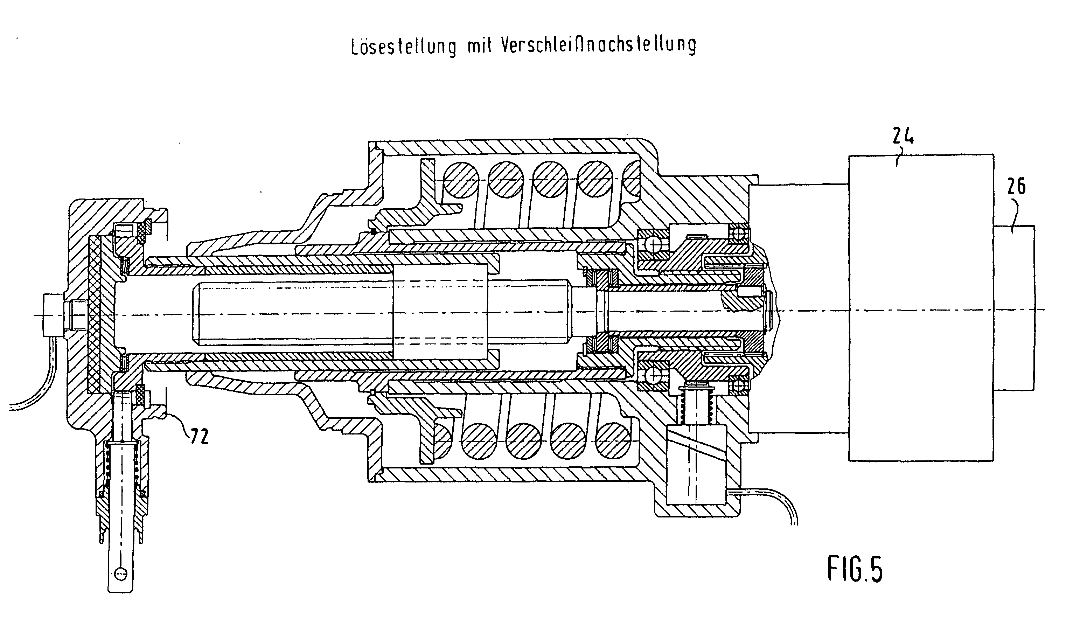

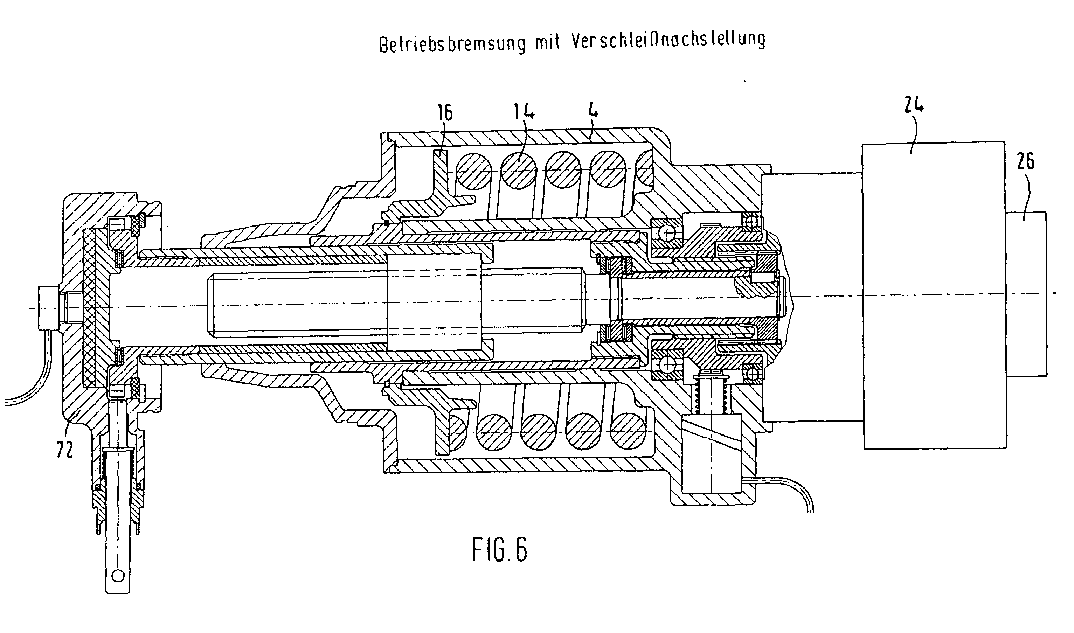

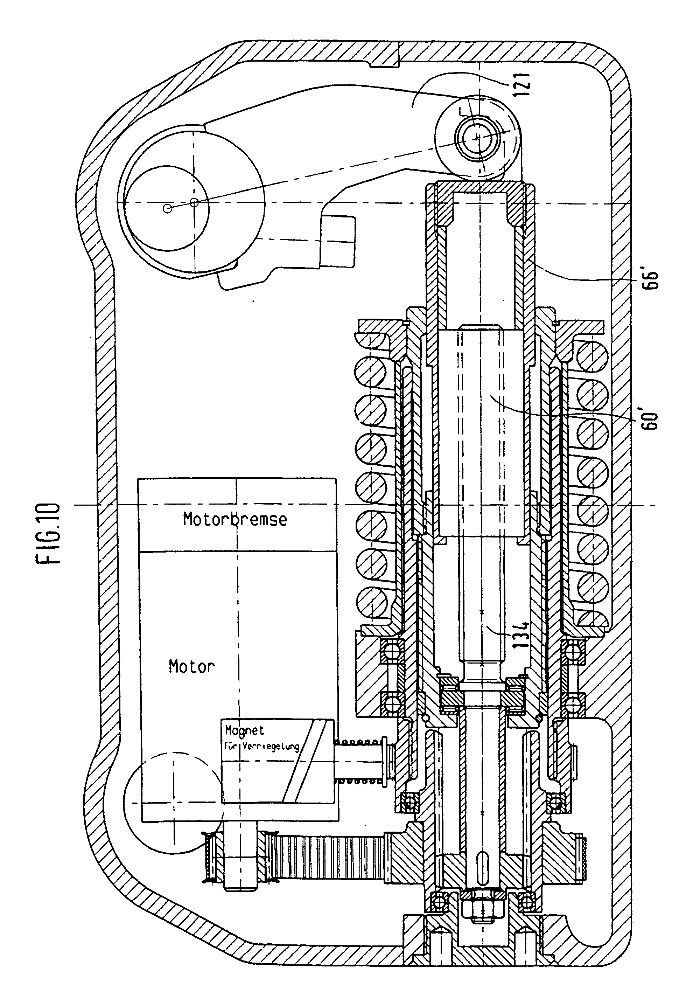

Die Funktion der Notlöseeinrichtung kann ebenfalls in diesen separaten Nachsteller integriert werden, alternativ ist aber auch ein Mechanismus denkbar, der auf einer Drehung der Bremsspindel beruht. Aus Bauraumgründen ist in dieser Variante der Motor nicht koaxial zur Bremsspindel angeordnet, sondern seitlich über den Zahnriemen 110 mit dieser verbunden. Die verschiedenen Stellungen des Aktuators in dieser Variante sind in den Figuren 8, 9, 10 entsprechend zu den Figuren 5, 6, 7 dargestellt.

Nach Fig. 8 wird zum Betätigen der Federspeicherbremse der Riegel 46' gelöst. Dadurch dreht sich die Mutter 40' zusammen mit der Hülse 115, so daß sich die Speicherfeder 14' entspannen kann, indem sie den Ringschieber 16' axial vorschiebt, der die Buchse 20' mitnimmt und die Buchse 62' nebst Bremsspindel 134 axial in der Hülse 114 vorschiebt.

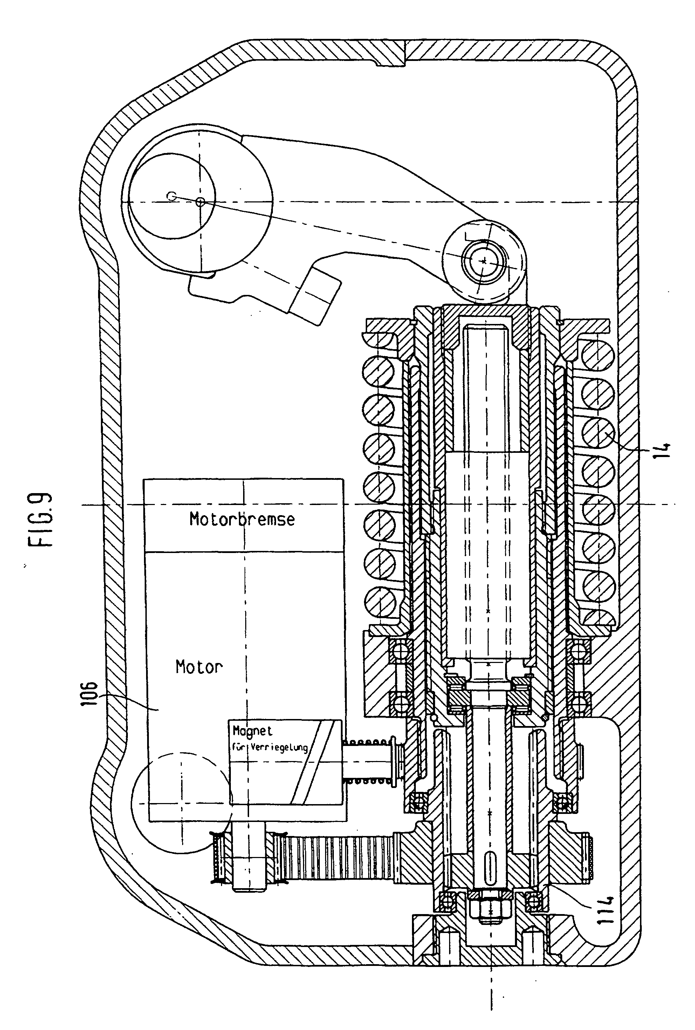

Das Lösen der Federbremse erfolgt nach Fig. 9 durch den Elektroantrieb, welcher die Hülse 114 dreht, was die verriegelte Speicherfeder 14' spannt und die Bremsspindel 134 axial zurückzieht (siehe auch Fig. 5).

Eine Betriebsbremsung erfolgt ausschließlich durch den Elektromotor 106. Der Riegel 46 hindert ein ungewolltes Entspannen der Speicherfeder 14. Beim Drehen der Hülse 114 drehen sich der Mitnehmer 32 und die Bremsspindel 134 mit. Dabei dreht sich auf der Bremsspindel die Mutter 60', so daß sich die Hülse 66 axial vorschiebt und den Bremshebel 121 vordrückt. Beim Lösen der Bremse wird die Mutter 60' auf der Spindel zurückgedreht, so daß sie sich axial zurückzieht.

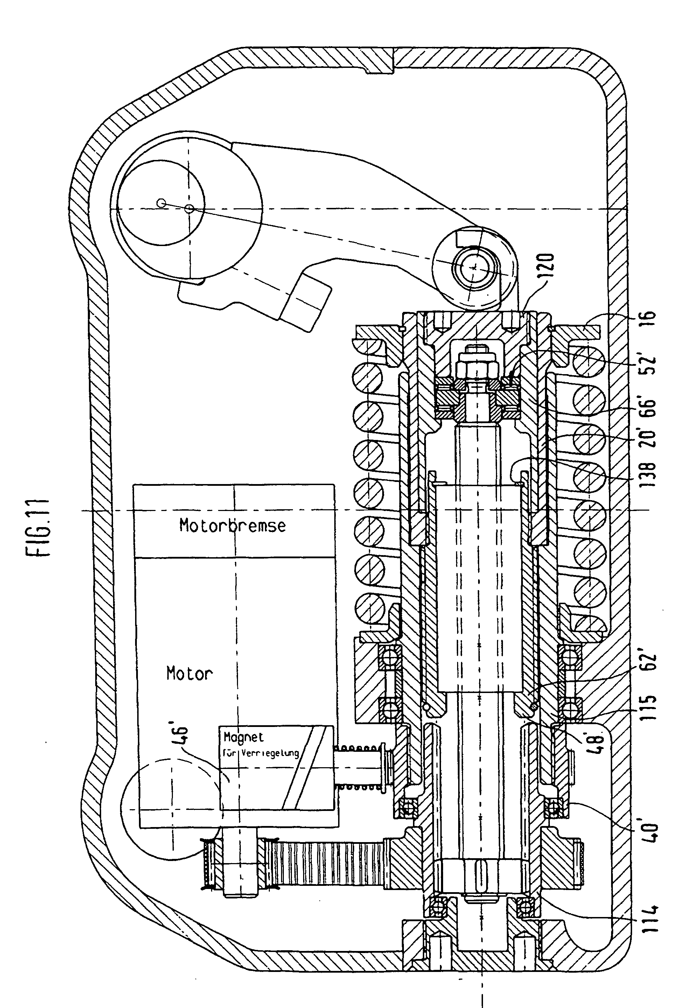

Fig. 11 unterscheidet sich von dem Beispiel der Fig. 7 im wesentlichen durch Art der Abstützung der Axialkräfte an der Gewinde-Bremsspindel. Der Hülsenansatz 115' wirkt hierbei zugleich als Aufnahme für die Speicherfeder 14'. Die Feder 14' wirkt wiederum auf einen Schieber 16', der auf einer Hülse 20' befestigt ist, die auf einer inneren Hülse 66' sitzt. Die Abstützung der Gewinde-Bremsspindel erfolgt bei diesem Ausführungsbeispiel im axialen Endbereich der Spindel 134' durch Axiallager 52', welche an einer inneren Abstufung der Hülse 66' und am Deckel 120 fixiert sind. Die Mutter ist in der Buchse 66' fixiert (an einer Seite durch einen Bund 48', an der anderen Seite durch einen weiteren Sprengring 138). Die zusätzlichen Buchsen/Hülse 137 und 118 des Ausführungsbeispiels der Fig. 7 können bei diesem Ausführungsbeispiel eingespart werden.

### Bezugszeichen

- Bremskraftaktuator: 2
- Gehäuse: 4
- Deckelabschnitt: 6
- Bohrung: 8
- innere Wandung: 10
- äußere Wandung: 12
- Speicherfeder: 14
- Schieber: 16
- Hülse: 18
- Bund: 20
- Getriebe: 22
- Elektromotor: 24
- Haltebremse: 26
- Hohlwellenansatz: 28
- Flügelrad/Mitnehmer: 30
- Flügel: 32
- Bolzen: 34
- Hülsen: 36,38
- Mutter: 40
- Lager: 42, 44
- Magnetisch wirkende Verriegelung: 46
- Abstufung: 48
- Scheibe: 50
- Lagern: 52. 54
- Ring: 56
- Mutter/Spindelbaueinheit: 58
- Mutter: 60
- Hülse: 62
- Ansatz: 64
- Buchse: 66
- Ring: 68
- Gehäusedeckel: 70
- Jocheinrichtung: 72
- Ringgehäuseelement: 74
- Faltenbalg: 76
- Hebel: 78
- Bremszange: 80
- Bremsbacken: 82
- Bremsscheibe: 84
- Achse: 86
- Riegel: 88
- Zuspannvorrichtung: 102
- Schienenfahrzeug-Scheibenbremse: 104
- Elektromotor/Getriebe: 106
- Motorbremse: 106
- Abtriebswelle: 108
- Zahnriemen: 110
- Ritzel: 112
- Spindelhülse: 114
- Innenhülsenansatz: 115
- Lager: 116,117
- Hülse: 118
- Deckel: 120
- Bremshebel: 121
- Exzenter: 122
- Exzenterwelle: 124
- Zangenhebel: 126a
- Zangenhebel: 126b
- Belaghalter: 127
- Druckstangensteller: 128
- Radiallager: 130
- Gehäusedeckel: 132
- Bremsspindel: 134
- Sechskant: 136
- Hülse: 137

## Patentansprüche

1. Bremsaktuator, insbesondere für eine Schienenfahrzeugbremse, mit
- einer Betriebsbremseinheit mit einem elektromotorischen Antrieb (24, 106) zum Zuspannen und Lösen der Bremse,
- einer Sicherheitsbremseinheit mit mindestens einer Speicherfedereinrichtung (14, 14') zum Zuspannen der Bremse,
- einer Bremsspindel (34, 134) zum Umsetzen der Drehbewegung des elektromotorischen Antriebes in eine translatorische Bewegung zum Betätigen einer Bremszuspannmechanik,;
- wobei die mindestens eine Speicherfedereinrichtung (14, 14') und die Bremsspindel (34, 134) koaxial zueinander angeordnet sind,
- wobei die Bremsspindel (34, 134) und die Speicherfedereinrichtung (14, 14') mechanisch in Reihe geschaltet sind, derart, daß sich die Kräfte aus der Spindel und der Feder in keiner Betriebsstellung an einem Bremsbelag addieren, und
- wobei die Bremsspindel (34, 134) in einer Abtriebswelle oder in einer Hülse (28, 114) eines Getriebes (22) axial verschieblich aber relativ zur Antriebswelle/Hülse (28, 114) unverdrehbar geführt ist.

2. Bremsaktuator nach Anspruch 1, **dadurch gekennzeichnet, daß** der elektromotorische Antrieb einen Elektromotor (24) aufweist, der axial an die Bremsspindel (34) angesetzt ist.

3. Bremsaktuator nach Anspruch 1 oder 2, **dadurch gekennzeichnet, daß** zwischen den Elektromotor (24) und die Bremsspindel (23, 134) ein Umschlingungsgetriebe geschaltet ist, wobei der Elektromotor (106) im wesentlichen parallel zur Gewinde-Bremsspindel (34, 134) ausgerichtet ist, oder daß zwischen den Elektromotor (24) und die Bremsspindel (34, 134) ein Planeten- oder Stirnradgetriebe geschaltet ist.

4. Bremsaktuator nach einem der vorstehenden Ansprüche, **dadurch gekennzeichnet, daß** dem Elektromotor (24, 106) eine elektromagnetische Haltebremse (26, 106) zugeordnet ist.

5. Bremsaktuator nach einem der vorstehenden Ansprüche, **dadurch gekennzeichnet, daß** die Speicherfeder (34, 134) als Federpaket aufgebaut ist.

6. Bremsaktuator nach einem der vorstehenden Ansprüche, **gekennzeichnet durch** eine Mutter-/Spindelbaueinheit (58) zur Umsetzung der Drehbewegungen des Elektromotors (24, 106) in eine translatorische Verschiebung der Bremsspindel (34, 134).

7. Bremsaktuator nach einem der vorstehenden Ansprüche, **dadurch gekennzeichnet, daß** an dem einen axialen Ende der Mutter-/Spindelbauein heit (58) eine Jocheinrichtung (72) zur Aufbringung der Zuspannkraft auf die Bremszange (80) angeordnet ist.

8. Bremsaktuator nach einem der vorstehenden Ansprüche, **dadurch gekennzeichnet, daß** die Jocheinrichtung (72) mit einer Notlöseeinrichtung (Riegel 88) und/oder mit einer Kraftmeßeinrichtung versehen ist.

9. Bremsaktuator nach einem der vorstehenden Ansprüche, **dadurch gekennzeichnet, daß** eine zweite Mutter-/Spindelbaueinheit mit einer Mutte r (40, 40') und einer Spindelhülse (38) mit einer Verriegelung (46) zum Gespannthalten der Speicherfeder (14) vorgesehen ist.

10. Bremsaktuator nach einem der vorstehenden Ansprüche, **dadurch gekennzeichnet, daß** die Verriegelung (46) elektromagnetisch betätigbar ausgelegt ist.

11. Bremsaktuator nach einem der vorstehenden Ansprüche, **dadurch gekennzeichnet, daß** die Spindelhülse (138) relativ zur Gewindespindel verdrehbar und an dieser über ein Axiallager (52, 54) abgestützt ist.

12. Bremsaktuator nach einem der vorstehenden Ansprüche, **dadurch gekennzeichnet, daß** der Elektromotor (6) über einen Zahnriemen (10) ein Ritzel (12) antreibt, welches auf der Spindelhülse (114) drehbar gelagert ist.

13. Bremsaktuator nach einem der vorstehenden Ansprüche, **dadurch gekennzeichnet, daß** an einem axialen Ende des Bremsaktuators ein Exzenterhebel (121) einer Exzenteranordnung angreift, die mit einer Bremszange (80) gekoppelt ist.

14. Bremsaktuator nach einem der vorstehenden Ansprüche, **dadurch gekennzeichnet, daß** der Elektromotor (24, 106) direkt getriebelos auf die Bremsspindel (34, 134) einwirkt.

15. Bremsaktuator nach einem der vorstehenden Ansprüche, **dadurch gekennzeichnet, daß** die Federeinrichtung (14, 14') eine Anzahl am Umfang der Bremsspindel (34, 134) verteilter Einzelfedern umfaßt.

## Claims

1. Brake actuator, in particular for a rail vehicle brake system, comprising
- a service brake unit with an electro motor drive system (24, 106) for brake application and brake release,
- a safety brake device unit including at least one accumulator spring means (14, 14') for brake application,
- one brake spindle (34, 134) for converting the rotating movement of said electro motor drive system into a translational movement for operating a mechanical brake application means,
- wherein said at least one accumulator spring means (14, 14') and said brake spindle (34, 134) are disposed in coaxial relation to each other,
- wherein said brake spindle (34, 134) and said accumulator spring means (14, 14') are mechanically connected in tandem such that the forces from said spindle and said spring will not add on a brake lining in any operating position, and
- wherein said brake spindle (34, 134) is guided in an output shaft or a sleeve (28, 114) of a gearing (22) for axial displacement but not for rotation relative to the input shaft/sleeve (28, 114).

2. Brake actuator according to Claim 1, **characterised in that** said electro motor drive system includes a motor (24) that is mounted on said brake spindle (34) in an axial direction.

3. Brake actuator according to Claim 1 or 2, **characterised in that** a wrap-around gearing is connected between said motor (24) and said brake spindle (23, 134), with said motor (106) being oriented substantially in parallel with said gearing brake spindle (34, 134), or that a planetary or spur gearing is connected between said motor (24) and said brake spindle (34, 134).

4. Brake actuator according to any of the preceding Claims, **characterised in that** an electromagnetic stop brake (26, 106) is associated with said motor (24, 106).

5. Brake actuator according to any of the preceding Claims, **characterised in that** said accumulator spring (34, 134) is structured as a spring assembly.

6. Brake actuator according to any of the preceding Claims, **characterised by** a structural nut/spindle unit (58) for converting the rotating movements of said motor (24, 106) into a translational displacement of said brake spindle (34, 134).

7. Brake actuator according to any of the preceding Claims, **characterised in that** on a first axial end of said structural nut/spindle unit (58) a bridge means (72) is disposed for applying the application force onto the brake calliper (80).

8. Brake actuator according to any of the preceding Claims, **characterised in that** said bridge means (72) is provided with an emergency release means (lock 88) and/or a force-sensing means.

9. Brake actuator according to any of the preceding Claims, **characterised in that** a second structural nut/spindle unit with a nut (40, 40') and a spindle sleeve (38) is provided with a locking means (46) for holding said accumulator spring (14) in the biased condition.

10. Brake actuator according to any of the preceding Claims, **characterised in that** said locking means (46) is designed for electromagnetic actuation.

11. Brake actuator according to any of the preceding Claims, **characterised in that** said spindle sleeve (138) is rotatable relative to said threaded spindle and is supported on the latter via a thrust bearing (52, 54).

12. Brake actuator according to any of the preceding Claims, **characterised in that** said motor (6) drives a pinion (12) via a toothed belt (10), which pinion is supported for rotation on said spindle sleeve (114).

13. Brake actuator according to any of the preceding Claims, **characterised in that** an eccentric lever (121) of an eccentric system is engaged on one axial end of the brake actuator, which eccentric system is linked up with a brake calliper (80).

14. Brake actuator according to any of the preceding Claims, **characterised in that** said motor (24, 106) acts upon said brake spindle (34, 134) directly, without a gearing.

15. Brake actuator according to any of the preceding Claims, **characterised in that** said spring means (14, 14') comprises a number of individual springs distributed along the periphery of said brake spindle (34, 134).

## Revendications

1. Acteur de frein, en particulier pour un système de freinage d'un véhicule sur rails, comprenant
- une unité de frein en service normal, à un système d'entraînement électromoteur (24, 106) pour le serrage et desserrage du frein,
- un dispositif de frein de sécurité, comprenant au moins un moyen à ressort accumulateur (14, 14') afin de serrer le frein,
- une broche de frein (34, 134) afin de convertir le mouvement rotatif dudit système d'entraînement électromoteur en un mouvement de translation afin de commander un moyen mécanique de serrage du frein,
- dans lequel ledit au moins un moyen à ressort accumulateur (14, 14') et ladite broche de frein (34, 134) sont disposés en relation coaxial l'un relativement à l'autre,
- dans lequel ladite broche de frein (34, 134) et ledit moyen à ressort accumulateur (14, 14') sont reliés en tandem, de façon mécanique, d'une telle manière, que les efforts de ladite broche et dudit ressort ne soient additionnés sur une garniture de frein en toute position de service quelconque, et
- dans lequel ladite broche de frein (34, 134) est guidée dans un arbre mené ou un fourreau (28, 114) d'un engrenage (22) pour le déplacement axial mais non pour une rotation relative de l'arbre d'entraînement/fourreau (28, 114).

2. Acteur de frein selon la revendication 1, **caractérisé en ce que** ledit système d'entraînement électromoteur comprend un moteur électrique (24) monté sur ladite broche de frein (34) en sens axial.

3. Acteur de frein selon la revendication 1 ou 2, **caractérisé en ce qu'**un engrenage enveloppe est relié entre ledit moteur électrique (24) et ladite broche de frein (23, 134), audit moteur électrique (106) étant orienté essentiellement en parallèle à ladite broche de frein d'engrenage (34, 134), ou **en ce qu'**un engrenage planétaire ou un engrenage droit est relié entre ledit moteur électrique (24) et ladite broche de frein (34, 134).

4. Acteur de frein selon une quelconque des revendications précédentes, **caractérisé en ce qu'**un frein d'arrêt électromagnétique (26, 106) est affecté audit moteur électrique (24, 106).

5. Acteur de frein selon une quelconque des revendications précédentes, **caractérisé en ce que** ledit ressort accumulateur (34, 134) est conçu sous forme d'un bloc ressort.

6. Acteur de frein selon une quelconque des revendications précédentes, **caractérisé par** une unité structurelle à écrou/broche (58) afin de convertir les mouvements rotatifs dudit moteur électrique (24, 106) en un déplacement en translation de ladite broche de frein (34, 134).

7. Acteur de frein selon une quelconque des revendications précédentes, **caractérisé en ce qu'**un moyen à pont (72) est disposé à une première extrémité axiale de ladite unité structurelle à écrou/broche (58) afin de transférer l'effort de serrage à la mâchoire de frein (80).

8. Acteur de frein selon une quelconque des revendications précédentes, **caractérisé en ce que** ledit moyen à pont (72) est muni d'un moyen de desserrage de frein d'urgence (verrou 88) et/ou d'un moyen détecteur de forces.

9. Acteur de frein selon une quelconque des revendications précédentes, **caractérisé en ce qu'**une deuxième unité structurelle à écrou/broche, à un écrou (40, 40') et un fourreau de broche (38) est muni d'un moyen de verrouillage (46) afin de maintenir ledit ressort accumulateur (14) en état de précontrainte.

10. Acteur de frein selon une quelconque des revendications précédentes, **caractérisé en ce que** ledit moyen de verrouillage (46) est conçu pour commande électromagnétique.

11. Acteur de frein selon une quelconque des revendications précédentes, **caractérisé en ce que** ledit fourreau de broche (138) est rotatif relativement à la broche filetée, en étant appuyé sur la dernière via un palier lisse de butée (52, 54).

12. Acteur de frein selon une quelconque des revendications précédentes, **caractérisé en ce que** ledit moteur électrique (6) entraîne un pignon (12) via une courroie dentée (10), audit pignon étant appuyé pour rotation sur ledit fourreau de broche (114).

13. Acteur de frein selon une quelconque des revendications précédentes, **caractérisé en ce qu'**un levier excentrique (121) d'une unité excentrique se trouve en prise sur une extrémité axiale de l'acteur de frein, cette unité excentrique étant reliée à ladite mâchoire de frein (80).

14. Acteur de frein selon une quelconque des revendications précédentes, **caractérisé en ce que** ledit moteur électrique (24, 106) agit sur ladite broche de frein (34, 134) directement, sans un engrènement.

15. Acteur de frein selon une quelconque des revendications précédentes, **caractérisé en ce que** ledit moyen à ressort (14, 14') comprend un nombre de ressort individuels distribués le long de la périphérie de ladite broche de frein (34, 134).
